# EUROPEAN PATENT APPLICATION

(11) **EP 4 835 144 A1**
(43) Date of publication of application: **04.11.2026**
(21) Application number: 25315155.9
(22) Date of filing: 02.05.2025
(51) Int. Cl.: C25B 1/042, C25B 1/23, C25B 9/77, C25B 11/047, C25B 13/07, C25B 15/08

(54) **INTEGRATION OF SOLID OXIDE CELL ELECTROLYZER WITH POWER PLANT**

(71) Applicant: TotalEnergies OneTech, 92400 Courbevoie (FR)
(72) Inventor: Kettner, Miroslav, B-7181 Seneffe (BE)
(74) Representative: Hensenne, Peter

(57) **Abstract**

The disclosure concerns a process to produce at least hydrogen, said process is remarkable in that it comprises the steps of (a) providing one or more solid oxide electrolyzer cells, wherein each of said one or more solid oxide electrolyzer cells has a cathode (9) and an anode (11) and comprises a solid oxide electrolyte between the cathode (9) and the anode (11); further wherein the cathode (9), the anode (11), and the solid oxide electrolyte are each composed of one or more ceramic materials; (b) providing a cathode feed stream at the cathode (9), wherein the cathode feed stream comprises steam produced from heat of a power plant (3); and (c) providing electricity to the one or more solid oxide electrolyzer cells, so that the the cathode feed stream is reduced and that the cathode (9) generates a first effluent comprising at least hydrogen.

## Description

### Technical field

The present disclosure relates to a process to produce at least hydrogen, and to an installation suitable for producing at least hydrogen.

### Technical background

Hydrogen can be produced by electrolysis of water. When renewable electricity is used, green hydrogen is therefore produced.

For the electroconversion, three technologies can be usually used: alkaline electrolysis (AEL), proton exchange membrane electrolysis (PEMEL) or solid oxide electrolysis (SOEL). The most noticeable difference between those technologies is the temperature at which the electrolysis proceeds. Indeed, while AEL and PEMEL are low temperature electrolysis, limited generally to temperature ranging between 40°C and 100°C, SOEL uses special ceramic materials which become ion conductive only at temperature superior to 450°C. For the most developed O²⁻ conductive ceramics, the temperature are even superior to 650°C. However, the heat necessary to bring the water at such temperatures implies a certain demand in energy, which can be prohibitive.

The objective of the present disclosure is to develop a process to produce hydrogen which has low operational costs and low captical cost. It is indeed interesting to have hydrogen production process which is efficient in terms of lowering the energy needed to heat the process by providing waste heat from adjacent process.

### Summary

According to a **first aspect,** the disclosure relates to a process to produce at least hydrogen, said process is remarkable in that it comprises the following steps:
a) providing one or more solid oxide electrolyzer cells, wherein each of said one or more solid oxide electrolyzer cells has a cathode and an anode and comprises a solid oxide electrolyte between the cathode and the anode; further wherein the cathode, the anode, and the solid oxide electrolyte are each composed of one or more ceramic materials;
b) providing a cathode feed stream at the cathode, wherein the cathode feed stream is or comprises steam produced from heat of a power plant;
c) providing electricity to the one or more solid oxide electrolyzer cells, so that the cathode feed stream is reduced and that the cathode generates a first effluent comprising at least hydrogen.

Surprisingly, running electrolysis by using steam produced from heat of a power plant decreases the electrical energy demand. The energy that is required to evaporate the water for functioning one or more electrolysis cells is not yet required by directly using steam. The choice of SOEL technology over AEL cells or PEMEL results in higher energy efficiency which can be further lowered by feeding SOEC with steam and hereby save the energy required for conversion of water into steam.

Such a process, combining one or more solid oxide electrolyzer cells and steam produced from heat of a power plant, renders the electrolysis efficient and lowers the OPEX costs, since neither energy nor work are required for bringing the H₂O molecule at the required temperature, namely at a temperature suitable for the allowing the one or more solid oxide electrolyzer cells to operate at moderate current density and generate hydrogen.

For example, the cathode feed stream is or comprises steam produced from heat of a gas-fired power plant.

For example, the cathode feed stream is or comprises steam produced fromwaste heat coming from a power plant.

For example, the cathode feed stream is or comprises steam produced from waste heat coming from a gas-fired power plant.

Advantageously, the cathode feed stream of step (b) is provided at the cathode at a pressure ranging between 0.25 MPa and 0.60 MPa, preferably between 0.30 MPa and 0.55 MPa, more preferably between 0.35 MPa and 0.50 MPa.

Advantageously, the cathode feed stream of step (b) is provided at the cathode at a temperature ranging between 120°C and 180°C, preferably between 125°C and 175°C, more preferably between 130°C and 170°C.

Advantageously, when step (c) is carried out, the anode also generates a second effluent comprising at least oxygen.

For example, said second effluent is directed in a power plant, preferably in the power plant that produced the steam of step (b).

Advantageoulsly, step (c) is carried out at a temperature of at least 450°C, preferably of at least 500°C, more preferably of at least 550°C, even more preferably of at least 600°C, most preferably of at least 650°C.

With preference, step (c) is carried out at a temperature ranging between 650°C and 950°C, more preferably ranging between 700°C and 900°C, or between 750°C and 850°C.

Advantageously, the electricity provided in step (c) originates at least partially from one or more renewable sources.

Advantageoulsy, the electricity provided in step (c) originates at least partialy from said power plant, preferably from said gas-fired power plant.

Advantageously, the process further comprises a step (d) of recovering an hydrogen stream from the first effluent generated at the cathode.

Advantageously, the cathode feed stream further comprises carbon dioxde and/or carbon monoxide so that the first effluent generated at step (c) further comprises syngas. With preference, the process further comprises a step (e) of recovering a syngas stream from the first effluent generated at the cathode.

Advantageousy, the cathode feed stream further comprises carbon dixode and/or carbon monoxide generated from a CO₂-capture unit so that the first effluent generated at step (c) further comprises syngas. With preference, the process further comprises a step (e) of recovering a syngas stream from the first effluent generated at the cathode.

Advanatgeously, step (c) is carried out with a current density of at least 0.1 A/cm², preferably of at least 0.2 A/cm², more preferably of at least 0.3 A/cm², even more preferably of at least 0.4 A/cm², most preferably of at least 0.5 A/cm².

With preference, step (c) is carried out with a current density ranging between 0.1 A/cm² and 1.5 A/cm², or between 0.2 A/cm² and 1.4 A/cm², or between 0.3 A/cm² and 1.3 A/cm², or between 0.4 A/cm² and 1.2 A/cm², or between 0.5 A/cm² and 1.1 A/cm²..

Advantageously, step (c) is carried out at an operating voltage that is below 2.0 V per one solid oxide electrolyser cell, preferably below 1.8 V, more preferably below 1.6 V, and even more preferably below 1.4 V.

Advantageously, step (c) of providing electricity requires an energy of at most 43 kWh per kilogramme of hydrogen comprised in the first effluent generated at step (c); preferably of at most 42 kWh per kilogramme of hydrogen, more preferably of at most 41 kWh per kilogramme of hydrogen, most preferably of at most 40 kWh per kilogramme of hydrogen.

For example, said energy is an alternating electrical current.

With preference, step (c) of providing electricity requires an energy ranging between 36 kWh and 40 kWh per kilogramme of hydrogen comprised in the first effluent generated at step (c) or between 37 kWh and 39 kWh per kilogramme of hydrogen comprised in the first effluent generated at step (c).

Advantageously, step (a) is the step of providing more than one solid oxide electrolyzer cells, said solid oxide electrolyer cells being then arranged in an electrolyzer stack.

With preference, the step (c) of providing electricity requires an energy supplied to said electrolyzer stack of at most 36.0 kWh per kilogramme of hydrogen comprised in the first effluent generated at step (c); more preferably of at most 35.5 kWh per kilogramme of hydrogen, even more preferably of at most 35.0 kWh per kilogramme of hydrogen, most preferably of at most 34.5 kWh per kilogramme of hydrogen.

According to a **second aspect,** the disclosure relates to an installation for producing at least hydrogen, remarkable in that said installation comprises a power plant, an electrolyzer unit and at least one power source, the power plant being upstream of said electrolyzer unit and in thermal connection with said electrolyzer unit, and said one or more power sources being electrically connected to said electrolyzer unit, wherein the electrolyzer unit comprises one or more solid oxide electrolyzer cells, wherein each of said one or more solid oxide electrolyzer cells has a cathode and an anode and comprises a solid oxide electrolyte between the cathode and the anode, further wherein the cathode, the anode, and the solid oxide electrolyte are each composed of one or more ceramic materials; the anode having at least an anode output line and the cathode having a cathode input line and a cathode output line, and wherein the power plant is thermally connected to the cathode input line of the cathode of each of said one or more solid oxide electrolyzer cells.

With preference, the power plant is a fossil-fuel power plant or a biomass power plant. For example, a fossil-fuel power plant is a gas-fired power plant.

Advantageously, said installation comprises at least one CO₂-capture unit, said one or more CO₂-capture units comprising at least a carbon dioxide output line, and wherein said carbon dioxide output line is fluidically connected to the cathode input line of the cathode of each of said one or more solid oxide electrolyzer cells.

Wih preference, said one or more CO₂-capture units are part of said power plant.

Advantageously, the electrolyer unit comprises more than one solid oxide electrolyzer cells, and said solid oxide electrolyer cells are arranged in a stack.

Advantageously, the installation further comprises a heat pump downstream the power plant and upstream the cathode input line, and wherein the heat pump further comprises an output line thermally connected to said cathode input line.

Advantageously, the installation further comprises an oxygen-enriched inlet connecting fluidically the anode output line and the power plant.

### Description of the figures

- Figure 1: Schematic representation of an installation according to the present disclosure.
- Figure 2: Schematic representation of the installation according to the present disclosure and comprising a heat pump.
- Figure 3: Schematic representation of the installation according to the present disclosure and comprising a heat pump and an inlet suitable for directing the second effluent comprising oxygen from the anode output line to the power plant.

### Detailed description

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (*e.g.*, 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (*e.g.*, from 1.0 to 5.0 includes both 1.0 and 5.0). Any numerical range recited herein is intended to include all sub-ranges subsumed therein.

The term "steam" is used to refer to water in the gas phase, which is formed when water boils.

The term "transition metal" refers to an element whose atom has a partially filled *d* sub-shell, or which can give rise to cations with an incomplete *d* sub-shell (IUPAC definition). According to this definition, the transition metals are Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg, and Cn.

The metals Ga, In, Sn, TI, Pb and Bi are considered "post-transition" metals.

The metals Au, Ag, Ru, Rh, Pd, Os, Ir and Pt show outstanding oxidation resistance and are considered "noble" metals. Other metals can be considered "non-noble" metals.

The term "alkali metal" refers to an element classified as an element from group 1 of the periodic table of elements (or group IA), excluding hydrogen. According to this definition, the alkali metals are Li, Na, K, Rb, Cs and Fr.

The term "alkaline earth metal" refers to an element classified as an element from group 2 of the periodic table of elements (or group IIA). According to this definition, the alkaline earth metals are Be, Mg, Ca, Sr, Ba and Ra.

The term "rare earth elements" refer to the fifteen lanthanides, as well as scandium and yttrium. The 17 rare-earth elements are cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

The particular features, structures, characteristics or embodiments may be combined in any suitable manner, as would be apparent to a person skilled in the art from this disclosure, in one or more embodiments.

The present disclosure relates to a process to produce at least hydrogen, said process is remarkable in that it comprises the following steps:
a) providing one or more solid oxide electrolyzer cells, wherein each of said one or more solid oxide electrolyzer cells has an anode 11 and a cathode 9 and comprises a solid oxide electrolyte between the anode 11 and the cathode 9; further wherein the anode 11, the cathode 9 and the solid oxide electrolyte are each composed of one or more ceramic materials;
b) providing a cathode feed stream at the cathode 9, wherein the cathode feed stream is or comprises steam produced from heat of a power plant 3;
c) providing electricity to the one or more solid oxide electrolyzer cells, so that the cathode feed stream is reduced and that the cathode 9 generates a first effluent comprising at least hydrogen.

For example, the power plant 3 can be a fossil-fuel power plant, such as a gas-fired power plant, or a biomass power plant.

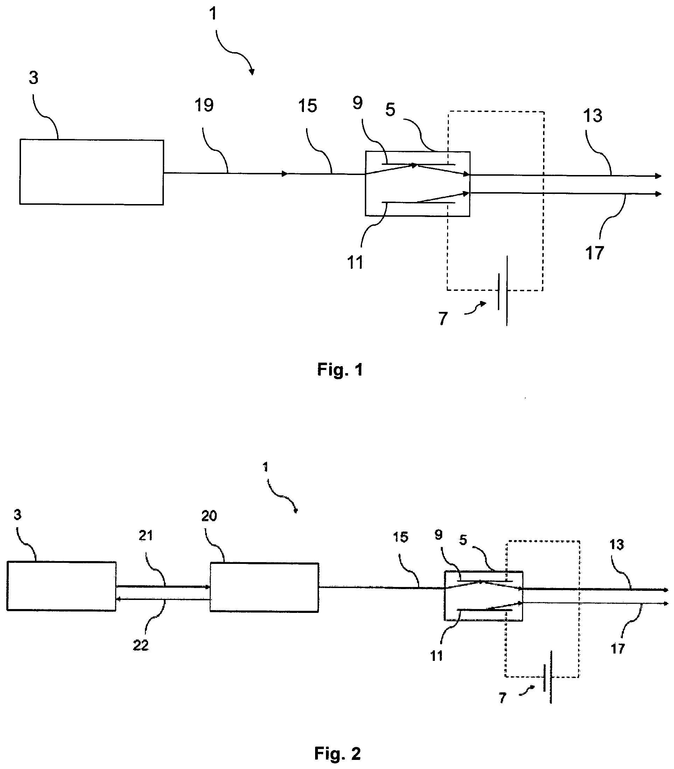

As depicted on figure 1, such process is carried out in an installation 1 which is remarkable in that it comprises a power plant 3, an electrolyzer unit 5 and at least one power source 7. The power plant 3 is upstream of said electrolyzer unit 5 and in fluidic communication with said electrolyzer unit 5. The one or more power sources 7 are electrically connected to said electrolyzer unit 5, wherein the electrolyzer unit 5 comprises one or more solid oxide electrolyzer cells, wherein each of said one or more solid oxide electrolyzer cells has a cathode 9 and an anode 11 and comprises a solid oxide electrolyte between the cathode 9 and the anode 11, further wherein the cathode 9, the anode 11, and the solid oxide electrolyte are each composed of one or more ceramic materials; the anode 11 having at least an anode output line 17 and the cathode 9 having a cathode input line 15 and a cathode output line 13, and wherein the power plant 3 is thermally connected to the cathode input line 15 of the cathode of each of said one or more solid oxide electrolyzer cells. The power plant 3 can also comprise a power plant output line 19, which can be either thermally connected to the catahode input line 15 or fluidically connected to the cathode input line 15 as shown on figure 1. Hot water or steam coming from the power plant 3 can be run through said power plant output line 19 to transfer its thermal energy to the cathode feed stream which run into the cathode input line 15.

As depicted on figure 2, the cathode feed stream can be or can comprise steam produced from waste heat coming from a power plant, or preferably coming from a gas-fired power plant. In fact,one or more heat pumps 20 are disposed downstream the power plant 3 and upstream the cathode input line 15, with a power plant cooling water outlet 21 and a power plant cooling water inlet 22. The one or more heat pump 20 further comprise an output line thermally connected to the cathode input line 15. Such power plant cooling water outlet 21 and such power plant cooling water inlet 22 fluidically connect the heat pump 20 to the power plant 3. The heat pump can recover the waste heat coming from the power plant and then generate steam, which thus transfer its thermal energy to the cathode feed stream which run into the cathode input line 15.

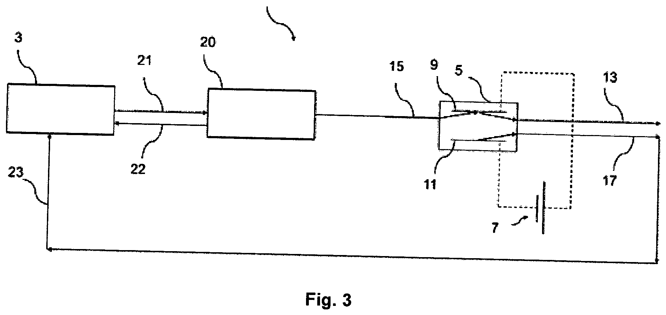

As depicted on figure 3, when step (c) is carried out, the anode 11 also generates, through the anode output line 17, a second effluent comprising at least oxygen. Said second effluent can be directed in a power plant, preferably in the power plant 3 that produces the steam of step (b) via the oxygen-enriched inlet 23. For example, the power plant 3 can be a fossil-fuel power plant or a biomass power plant. The oxygen-enriched inlet 23 is actually an inlet suitable for directing the second effluent comprising oxygen from the anode output line 17 to the power plant 3. The use of the second effluent boosts the efficiency of the power plant and improves the efficiency of the carbon capture from said power plant. This is particularly efficient when the power plant is a fossil-fuel power plant or a biomass power plant. An example of fossil-fuel power plant is a gas-fired power plant.

Altough figure 3 represents the installation with both a heat pump 20 and an oxygen-enriched inlet 23, an installation comprising an oxygen-enriched inlet 23 without the heat pump 20 can also be envisioned.

Advantageously the purity of the steam generated by an heat pump 20 is higher than the purity of the steam provided by a power plant 3. That is a reason why the heat pump 20 can fluidically transfer the steam to the cathode feed stream, by way of fluidically connecting the output line of the heat pump to the cathode input line 15, although thermal connection can also be implemented.

The combination between one or more solid oxide electrolyzer cells and the implementation of steam generated from a power plant allows to achieve higher efficiency of the electrolysis operation. Solid oxide electrolyzer cells are operating at or close to thermoneutral voltage where the heat demands of the reduction reaction are compensated by heat losses from the operation of solid oxide electrolyzer cells. Thus, for example, the step (c) is carried out at a temperature of at least 450°C, preferably of at least 500°C, more preferably of at least 550°C, even more preferably of at least 600°C, most preferably of at least 650°C. Such high temperature activate the one or more ceramic materials of the solid oxide electrolyte, which therefore facilitate the electrolysis of H₂O molecules. For example, the step (c) can be carried out at a temperature ranging between 650°C and 950°C, more preferably ranging between 700°C and 900°C, or between 750°C and 850°C..

It is also advantageous that the electrolyer unit 5 comprises more than one solid oxide electrolyzer cells to improve the efficiency of the electrolysis of the H₂O molecules. For example, the electrolyer unit can comprise at least 2 solid oxide electrolyzer cells, or at least 3, or at least 4, or at least 5, or at least 10 solid oxide electrolyzer cells. For example, said solid oxide electrolyer cells are arranged in a stack.

For example, the cathode feed stream of step (b) is provided at the cathode at a pressure ranging between 0.25 MPa and 0.60 MPa, preferably between 0.30 MPa and 0.55 MPa, more preferably between 0.35 MPa and 0.50 MPa.

For example, the cathode feed stream of step (b) is provided at the cathode at a temperature ranging between 120°C and 180°C, preferably between 125°C and 175°C, more preferably between 130°C and 170°C.

Advantageously, the one or more ceramic materials are one or more mixed oxides.

Advantageously, the one or more solid oxide electrolyser cells comprise a layer between the anode and the solid oxide electrolyte and/or between the cathode and the solid oxide electrolyte, wherein said layer is made of one or more ceramic materials, more preferably of one or more mixed oxides.

For example, the one or more ceramic materials are one or more mixed oxides; with preference, the one or more mixed oxides are doped with one or more lower-valent cations. With preference, said one or more mixed oxides are selected from:
- one or more oxides having a cubic fluorite structure being at least partially substituted with one or more lower-valent cations, preferentially selected from Sm, Gd, Y, Sc, Yb, Mg, Ca, La, Dy, Er, Eu, Ba; and/or
- one or more ABO₃-perovskites with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or
- one or more ABO₃-perovskites with A bivalent cation and B tetra-valent cation, being at least partially substituted with one or more lower-valent cations, preferably selected from Mg, Sc, Y, Nd, or Yb in the B position or with a mixture of different B elements in the B position; and/or
- one or more A₂B₂O₇-pyrochlores with A trivalent cation and B tetra-valent cation being at least partially substituted in A position with one or more lower-valent cations, preferentially selected from Ca or Mg, and comprising at least one of Sn, Zr, and Ti in B position.

For example, the one or more ceramic materials of the anode and/or the cathode further comprise one or more metals selected from nickel, molybdenum, cobalt, and iron. With preference, the one or more ceramic materials of the anode and/or the cathode further comprise nickel.

For example, the one or more ceramic materials of the anode are different from the one or more ceramic materials of the cathode. With preference, the one or more ceramic materials of the anode are one or more mixed oxides selected from
- one or more ABO₃-perovskites with A and B tri-valent cations, being at least partially substituted in A position with one or more lower-valent cations, preferentially selected from Ca, Sr, or Mg, and comprising at least one of Ni, Ga, Co, Cr, Mn, Sc, Fe and/or a mixture thereof in B position; and/or
- one or more ABO₃-perovskites with A bivalent cation and B tetra-valent cation, being at least partially substituted with one or more lower-valent cations, preferably selected from Mg, Sc, Y, Nd or Yb in the B position or with a mixture of different B elements in the B position.

For example, the one or more ceramic materials have a porosity ranging between 15% and 60% according to ASTM C373 standard, or between 30% and 60%.

Advantageously, the electricity provided in step (c) originates at least partially from one or more renewable sources, such as solar sources and/or wind energy. Considering the current environmental concerns, it is even better the electricity provided in step (c) is completely produced from one or more renewable sources. Nevertheless, the electricity provided in step (c) can also originate at least partialy or even completely from said power plant, or preferably from said fossil-fuel power plant or biomass power plant.

The steam generated in said power plant can be a low pressure steam and has a sufficient temperature and pressure to be fed in the cathode input line 15 as the cathode feed stream.

Fossil-fuel power plants or biomass power plants with an average electrical capacity of 400 MW, or able to generate an electrical power of 400 MW, can yield low pressure steam that would propell in a low pressure turbine, for example a turbine with 68 MW of power. This steam can be instead employed in the solid oxide electrolyzer unit 5. Alternatively, the gas-fired power plants can be equipped with a heat pump valorizing the heat in the cooling water leaving said gas-fired power plants to generate additional low pressure steam that can be valorized in the solid oxide electrolyzer unit 5. The average heat loss of fossil-fuel power plants or biomass power plant into cooling water is around 25%, *i.e.*, 400 MW fossil-fuel power plant or biomass power plant loses about 167 MW of heat in the coling water which can be recovered. In comparison, the water-fed 100 MW solid oxide electrolyzer would need about 18 MW of additional power for steam generation.

For example, the power needed to generate steam for the cathode feed stream of 500 MW solid electrolyzer is ranging between 15 MW and 100 MW, preferably between 20 MW and 95 MW, more preferably between 25 MW and 90 MW, even more preferably between 30 MW and 85 MW, or between 35 MW and 80 MW, or between 40 MW and 75 MW, or between 45 MW and 70 MW.

For example, the maximal electrical power output of said power plant is ranging between 0.10 GW and 2.0 GW, or between 0.15 GW and 1.9 GW, or between 0.20 GW and 1.8 GW, or between 0.0.25 GW and 1.7 GW, or between 0.30 GW and 1.6 GW, or between 0.35 GW and 1.5 GW.

For example, the electrical power consumed by said one or more solid oxide electrolyzer is ranging between 50 MW and 2000 MW, or between 100 MW and 1500 MW, or between 200 MW and 1000 MW.

Advantageously, the process further comprises a step (d) of recovering an hydrogen stream from the first effluent generated at the cathode 9. Said hydrogen stream can be directed into a storage tank (not shown) and/or can be used straightforwardly into one or more downstream processes.

In the case where the installation 1 comprises at least one CO₂-capture unit (not shown) with at least a carbon dioxide output line, and wherein said carbon dioxide output line is fluidically connected to the cathode input line 15 of the cathode of each of said one or more solid oxide electrolyzer cells, the cathode feed stream can further comprise carbon dioxide and/or carbon monoxide. With preference, said one or more CO₂-capture units can be part of said power plant 3. It is noted that the carbon dioxide which is introduced into the cathode feed stream can also originate from an other upstream unit, not necessarily one or more CO₂-capture units. Then, the first effluent generated at step (c) further comprises syngas. With preference, the process further comprises a step (e) of recovering a syngas stream from said first effluent generated at the cathode 9.

In case the power plant 3 is a gas-fired power plant and in case the natural gas used in the gas-fired power plant is a renewable natural gas, the resulting syngas can be also considered green, namely suitable for electrofuel (e-fuel) generation.

Advanatgeously, step (c) is carried out with a current density of at least 0.1 A/cm², preferably of at least 0.2 A/cm², more preferably of at least 0.3 A/cm², even more preferably of at least 0.4 A/cm², most preferably of at least 0.5 A/cm². With preference, step (c) can be carried out with a current density ranging between between 0.1 A/cm² and 1.5 A/cm², or between 0.2 A/cm² and 1.4 A/cm², or between 0.3 A/cm² and 1.3 A/cm², or between 0.4 A/cm² and 1.2 A/cm², or between 0.5 A/cm² and 1.1 A/cm². For ewample, step (c) can be carried out at an operating voltage that is below 2.0 V per one solid oxide electrolyser cell, preferably below 1.8 V, more preferably below 1.6 V, and even more preferably below 1.4 V.

Advantageously, step (c) of providing electricity requires an energy of at most 43 kWh per kilogramme of hydrogen comprised in the first effluent generated at step (c); preferably of at most 42 kWh per kilogramme of hydrogen, more preferably of at most 41 kWh per kilogramme of hydrogen, most preferably of at most 40 kWh per kilogramme of hydrogen.

For example, said energy is an alternating electrical current.

With preference, step (c) of providing electricity requires an energy ranging between 36 kWh and 40 kWh per kilogramme of hydrogen comprised in the first effluent generated at step (c) or between 37 kWh and 39 kWh per kilogramme of hydrogen comprised in the first effluent generated at step (c).

Advantageously, step (a) is the step of providing more than one solid oxide electrolyzer cells which are then arranged in an electolyer stack. In this case, the step (c) of providing electricity requires an energy supplied to said electrolyzer stack of at most 36.0 kWh per kilogramme of hydrogen comprised in the first effluent generated at step (c); preferably of at most 35.5 kWh per kilogramme of hydrogen, more preferably of at most 35.0 kWh per kilogramme of hydrogen, most preferably of at most 34.5 kWh per kilogramme of hydrogen.

### Test and determination methods

The values are coming from process simulations of the SOEC. The gas fired power plant values are coming from publications or publicly available sources - e.g. https://en.wikipedia.org/wiki/Combined cycle power plant.

### Examples

The embodiments of the present disclosure will be better understood by looking at the different examples below.

In an example, a gas fired power plant with a maximal electrical power output of 400 MW is equipped with dual pressure boiler which derives 68 MW from low pressure steam with pressure of 4 barg and 150 °C. The efficiency of the turbine is 90% which results in 76 MW of power available for low pressure steam generation. This results in 99 tph of steam available for the electrolyzer at the condition of lowering the power plant's electrical output by 68 MW. This is sufficient to supply 500 MW SOEC co-electrolyzer producing syngas with M=2. If such electrolyzer should generate its steam in electric boiler, it would require 74 MW of electricity.

The combination of gas fired power plant and the SOEC co-electrolyzer thus enables to save 6 MW of electricity.

In second example, a gas fired power plant with a maximum electrical power output of 400 MW is using cooling water in the condenser. The overall heat loss in the cooling water amounts 167 MW. If a heat pump to produce low pressure steam is utilized which recovers 100 MW with COP 2, the required energy to run this heat pump is 50 MW. This corresponds to 131 tph of steam with 4 barg and 150 °C. This amount of steam is sufficient to supply 672 MW SOEC co-electrolyzer producing syngas with M=2. If such electrolyzer should generate its steam in electric boiler, it would require 99 MW of electricity. The combination of gas fired power plant, heat pump, and the SOEC co-electrolyzer thus enables to save 49 MW of electricity.

In third example, a gas fired power plant with maximum electrical power output 1.3 GW needs ca. 273 000 m³ of natural gas/h at full power. The amount of oxygen required to bum the natural gas is 780 t/h. Normally, this oxygen is supplied by air with 21 % oxygen concentration. An adjacent 1.3 GW solid oxide electrolyzer would produce approximately 273 t/h of oxygen. By creating oxygen enriched air which is then fed to the gas fired power plant, the specific net work of the natural gas is increased so that eventually, the fuel consumption of the gas fired power plant decreases by approximately 8%. The combination of gas fired power plant and SOEC electrolyzer thus increases the energy efficiency of the power plant.

## Claims

1. A process to produce at least hydrogen, said process is **characterized in that** it comprises the following steps:
a) providing one or more solid oxide electrolyzer cells, wherein each of said one or more solid oxide electrolyzer cells has a cathode (9) and an anode (11) and comprises a solid oxide electrolyte between the cathode (9) and the anode (11); further wherein the cathode (9), the anode (11), and the solid oxide electrolyte are each composed of one or more ceramic materials;
b) providing a cathode feed stream at the cathode (9), wherein the cathode feed stream is steam produced from heat of a power plant (3);
c) providing electricity to the one or more solid oxide electrolyzer cells, so that the cathode feed stream is reduced and that the cathode (9) generates a first effluent comprising at least hydrogen.

2. The process according to claim 1, **characterized in that** step (c) is carried out at a temperature of at least 450°C, preferably between 650°C and 950°C.

3. The process according to claim 1 or 2, **characterized in that** the electricity provided in step (c) originates at least partially from one or more renewable sources **and/or** originates at least partialy from said power plant.

4. The process according to any one of claims 1 to 3, **characterized in that** the cathode feed stream is or comprises steam produced from waste heat coming from a power plant (3).

5. The process according to any one of claims 1 to 4, **characterized in that** the process further comprises a step (d) of recovering an hydrogen stream from the first effluent generated at the cathode (9).

6. The process according to any one of claims 1 to 5, **characterized in that** the cathode feed stream further comprises carbon dioxide so that the first effluent generated at step (c) further comprises syngas **and/or in that** the cathode feed stream further comprises carbon dioxide generated from a CO₂-capture unit so that the first effluent generated at step (c) further comprises syngas; with preference, the process further comprises a step (e) of recovering a syngas stream from said first effluent generated at the cathode (9).

7. The process according to any one of claims 1 to 6, characterzed in that step (c) is carried out with a current density of at least 0.1 A/cm² **and/or** in that step (c) is carried out at an operating voltage that is below 2.0 V per one solid oxide electrolyzer cell.

8. The process according to any one of claims 1 to 7, **characterized in that** step (c) of providing electricity requires an energy of at most 43 kWh per kilogramme of hydrogen comprised in the first effluent generated at step (c); preferably an energy ranging between 36 kWh and 40 kWh per kilogramme of hydrogen comprised in the first effluent generated at step (c).

9. The process according to any one of claims 1 to 8, **characterized in that** when step (c) is carried out the anode (11) also generates a second effluent comprising at least oxygen; with preference, said second effluent is directed in the power plant (3) that produces the steam of step (b).

10. The process according to any one of claims 1 to 9, **characterized in that** step (a) is the step of providing more than one solid oxide electrolyzer cells, said solid oxide electrolyer cells being then arranged in an electrolyzer stack; with preference, the step (c) of providing electricity requires an energy supplied to said electrolyzer stack of at most 36.0 kWh per kilogramme of hydrogen comprised in the first effluent generated at step (c).

11. The process according to any one of claims 1 to 10, characterzized in that the cathode feed stream of step (b) is provided at the cathode at a pressure ranging between 0.25 MPa and 0.60 MPa.

12. Installation (1) for producing at least hydrogen, **characterized in that** said installation (1) comprises a power plant (3), an electrolyzer unit (5) and at least one power source (7), the power plant (3) being upstream of said electrolyzer unit (5) and in thermal connection with said electrolyzer unit (5), and said one or more power sources (7) being electrically connected to said electrolyzer unit (5), wherein the electrolyzer unit (5) comprises one or more solid oxide electrolyzer cells, wherein each of said one or more solid oxide electrolyzer cells has a cathode (9) and an anode (11) and comprises a solid oxide electrolyte between the cathode (9) and the anode (11), further wherein the cathode (9), the anode (11), and the solid oxide electrolyte are each composed of one or more ceramic materials; the anode (11) having at least an anode output line (17) and the cathode (9) having a cathode input line (15) and a cathode output line (13) and wherein the power plant (3) is thermally connected to the cathode input line (15) of the cathode of each of said one or more solid oxide electrolyzer cells; with preference, the power plant (3) is a fossil-fuel power plant or a biomass power plant.

13. Installation (1) according to claim 12, **characterized in that** said installation (1) comprises at least one CO₂-capture unit, said one or more CO₂-capture units comprising at least a carbon dioxide output line, and wherein said carbon dioxide output line is fluidically connected to the input line of the cathode of each of said one or more solid oxide electrolyzer cells; wih preference, said one or more CO₂-capture units are part of said power plant (3).

14. Installation (1) according to claim 12 or 13, **characterized in that** the electrolyer unit (5) comprises more than one solid oxide electrolyzer cells, and said solid oxide electrolyer cells are arranged in a stack.

15. Installation (1) according to any one of claims 12 to 14, **characterized in that** the installation further comprises a heat pump (20) downstream the power plant (3) and upstream the cathode input line (15), and wherein the heat pump further comprises an output line thermally connected to said cathode input line; **and/or** an oxygen-enriched inlet (23) connecting fluidically the anode output line (17) and the power plant (3).
